# EUROPÄISCHE PATENTANMELDUNG

(11) **EP 3 232 539 A1**
(43) Veröffentlichungstag der Anmeldung: **18.10.2017**
(21) Anmeldenummer: 16165332.4
(22) Anmeldetag: 14.04.2016
(51) Int. Cl.: H02K 1/24, H02K 1/28

(54) **ROTOR FÜR EINE ELEKTRISCHE ROTIERENDE MASCHINE**

(71) Anmelder: Siemens Aktiengesellschaft, 80333 München (DE)
(72) Erfinder: Kümmlee, Horst, 13505 Berlin (DE); Schmidt, Stefan, 16321 Bernau OT Schönow (DE)

(57) **Zusammenfassung**

Die Erfindung betrifft einen Rotor (3) für eine elektrische rotierende Maschine (1), insbesondere eine Synchronmaschine (27), mit einer Welle (5) und mindestens einem Polschuh (7), wobei die Welle (5) eine erste Kontaktfläche (8) aufweist und wobei der mindestens eine Polschuh (7) eine zweite Kontaktfläche (9) aufweist. Um bei einem geringen Aufwand und niedrigen Kosten eine höhere Zuverlässigkeit zu erreichen, wird vorgeschlagen, dass die erste Kontaktfläche (8) eine erste Profilierung (28) aufweist und die zweite Kontaktfläche (9) eine zur ersten Profilierung (28) korrespondierende zweite Profilierung (29) aufweist, wobei die erste Profilierung (28) der ersten Kontaktfläche (8) formschlüssigen auf der korrespondierenden zweiten Profilierung (29) der zweiten Kontaktfläche (9) aufliegt.

## Beschreibung

Die Erfindung betrifft einen Rotor für eine elektrische rotierende Maschine, insbesondere eine Synchronmaschine, mit einer Welle und mindestens einem Polschuh, wobei die Welle eine erste Kontaktfläche aufweist und wobei der mindestens eine Polschuh eine zweite Kontaktfläche aufweist.

Weiterhin betrifft die Erfindung eine elektrische rotierende Maschine, insbesondere eine Synchronmaschine, mit einem derartigen Rotor.

Die Erfindung betrifft ferner ein Verfahren zur Herstellung eines derartigen Rotors für eine elektrische rotierende Maschine, insbesondere eine Synchronmaschine.

Ein derartiger Rotor kommt insbesondere bei direktanlaufenden Synchron-Schenkelpolmaschinen mit aufgesetzten Polschuhen zum Einsatz. Aufgesetzte Polschuhe kommen im Wesentlichen bei Großantrieben mit einer Leistung von mindestens 1 Megawatt vor. Zwischen dem Polschuh und der Welle, auf der der Polschuh aufgesetzt ist, bildet sich eine Teilfuge. Bei einem asynchronen Anlauf der Synchron-Schenkelpolmaschine, werden Wirbelströme in die aufgesetzten Polschuhe induziert, wobei insbesondere die Oberfläche der Polschuhe durch die Wirbelströme stark aufgeheizt wird. Im Zuge der Durchwärmung dehnen sich die Polschuhe aus. Die daraus resultierende Querkraft in der Teilfuge wird vornehmlich reibschlüssig gehalten. Wird die Haftreibung überwunden, kommt es zu wärmeinduzierte Relativverschiebung in der Teilfuge zwischen Polschuh und Welle. Eine derartige Relativverschiebung erfolgt zumeist sprunghaft und willkürlich. Die damit einhergehenden Masseverschiebungen wirken sich negativ auf den Wuchtzustand des Rotors und damit auf das Schwingungsverhalten aus.

Die Polschuhe werden bevorzugt mit der Welle durch Schrauben verbunden. Die Haftreibung in der Teilfuge zwischen Polschuh und Welle wird daher von den Vorspannkräften und den Reibwerten bestimmt. Insbesondere die Reibwerte lassen sich durch gezielte Änderung der Materialeigenschaften und Oberflächeneigenschaften der Reibpartner beeinflussen.

Aus der Patentschrift US 9,077,223 B2 ist eine elektrische rotierende Maschine mit einem Schenkelpolläufer bekannt, welcher Polkörper und Polschuhe aufweist. Die Polkörper sind einstückig aus einer Welle ausgebildet. Jeder Polschuh ist mit einer Vielzahl von Schrauben fest an dem zugehörigen Polkörper verbunden. Wenn ein Polschuh am entsprechenden Polkörper mit Hilfe der Schrauben befestigt wird, tritt im Bereich der Druckfläche ein kegelförmiger Druckbereich auf.

Jeder Polschuh oder sein entsprechender Polkörper weisen zumindest einen Vorsprung oder eine Ausnehmung auf, um den kegelförmigen Druckbereich im Bereich der Druckfläche zu begrenzen.

Aus der Offenlegungsschrift DE 44 15 224 A1 ist eine elektrische Maschine mit einem Polrad mit mehreren Polen bekannt, bei der für jeden Pol ein mit einem Joch einstückig verbundener Polschaft mit einer diesen umgebenden Erregerwicklung und einer am Ende des Polschaftes mittels Schrauben befestigten Polschuhanordnung vorgesehen ist. Hierbei soll die Abfangung der bei der Rotation des Polrades auftretenden, auf die Polschuhanordnung und die Erregerwicklung wirkenden Zentrifugalkräfte effektiver gestaltet werden. Zu diesem Zweck umfasst die Polschuhanordnung eine auf den Polschaft aufgeschraubte Halteplatte und einen ausschließlich mit der Halteplatte verschraubten Polschuh. Die durch die Erregerwicklung auftretenden Zentrifugalkräfte werden somit durch die Halteplatte abgefangen.

Der Erfindung liegt die Aufgabe zugrunde, einen Rotor für eine elektrische rotierende Maschine anzugeben, welcher, im Vergleich zum Stand der Technik, eine höhere Zuverlässigkeit aufweist und dabei einfach und kostengünstig herzustellen ist.

Diese Aufgabe wird erfindungsgemäß durch einen Rotor für eine elektrische rotierende Maschine, insbesondere eine Synchronmaschine, mit einer Welle und mindestens einem Polschuh gelöst, wobei die Welle eine erste Kontaktfläche aufweist, wobei der mindestens eine Polschuh eine zweite Kontaktfläche aufweist, wobei die erste Kontaktfläche eine erste Profilierung aufweist und die zweite Kontaktfläche eine zur ersten Profilierung korrespondierende zweite Profilierung aufweist, wobei die erste Profilierung der ersten Kontaktfläche formschlüssig auf der korrespondierenden zweiten Profilierung der zweiten Kontaktfläche aufliegt.

Die Aufgabe wird weiterhin durch eine elektrische rotierende Maschine, insbesondere eine Synchronmaschine, mit einem derartigen Rotor gelöst.

Überdies wird die Aufgabe gelöst durch ein Verfahren zur Herstellung eines derartigen Rotors für eine elektrische rotierende Maschine, insbesondere eine Synchronmaschine.

Die in Bezug auf den Rotor nachstehend angeführten Vorteile und bevorzugten Ausgestaltungen lassen sich sinngemäß auf die elektrische rotierende Maschine und das Herstellungsverfahren übertragen.

Eine derartige Profilierung (die Profilierung wird weiterhin auch Freiformprofilierung genannt) weist insbesondere, bezogen auf eine Bezugsebene, Erhöhungen und Vertiefungen auf. Eine zur ersten Profilierung korrespondierende zweite Profilierung entspricht dem zur ersten Profilierung passenden Gegenstück. Durch die Kontaktierung der beiden zueinander passenden Profilierungen entsteht beispielsweise eine Verzahnung zwischen den Kontaktflächen. Eine derartige Freiformprofilierung bietet den Vorteil, dass die Verbindung zwischen Polschuh und Welle frei dimensioniert werden kann. Durch die beiden zueinander passenden Profilierungen wird insbesondere eine formschlüssige Kraftübertragung zumindest in Querkraftrichtung erreicht. Durch eine derartige formschlüssige Verbindung wird eine wärmeinduzierte Relativverschiebung zwischen dem Polschuh und der Welle vermieden. Deshalb ein stabileres Schwingungsverhalten erreicht, was zu einer verbesserten Zuverlässigkeit, insbesondere im Betrieb mit asynchronem Anlauf, des Rotors führt. Darüber hinaus bedarf die Freiformprofilierung keiner zusätzlichen Verbindungselemente. Daher ist der Rotor einfach und kostengünstig herzustellen.

Bevorzugt liegt durch die Profilierungen zumindest in einer axialen Richtung eine Höhenvariation der jeweiligen Kontaktflächen vor. Die Höhenvariation liegt insbesondere im Millimeterbereich bis Zentimeterbereich. Durch eine derartige Höhenvariation, zumindest in axiale Richtung, wird eine formschlüssige Kraftübertragung in axiale Richtung erreicht, wodurch, insbesondere im Betrieb mit asynchronem Anlauf, eine wärmeinduzierte Relativverschiebung zwischen Polschuh und Welle, zumindest in axiale Richtung, vermieden wird.

Bei einer bevorzugten Ausführungsform erstrecken sich die Profilierungen im Wesentlichen über die gesamte axiale Länge der jeweiligen Kontaktfläche. Zwischen der ersten Kontaktfläche der Welle und der zweiten Kontaktfläche eines Polschuhs, welche auf der Welle aufliegt, liegt eine Teilfuge. Die Kraftübertragung kann, zumindest in axiale Richtung, flächig im Wesentlichen über die gesamte Teilfuge erfolgen. Durch eine derartige flächige Profilierung wird die formschlüssige Kraftübertragung optimiert.

Bevorzugt weisen die Profilierungen schräge Seitenflächen auf, wobei die erste Kontaktfläche mit der zweiten Kontaktfläche im Bereich der schrägen Seitenflächen kontaktiert ist. Durch die schrägen Seitenflächen erfolgt die Kontaktierung der Profilierungen, beispielsweise durch eine Verzahnung, spielfrei ohne dass ein komplexer Fügeprozess, wie beispielsweise Klemmen, Einpressen oder eine gemeinsame Bauteilbearbeitung, erforderlich ist. Durch die Profilierungen mit schrägen Seitenflächen wird eine spielfreie Kraftübertragung mit geringem Fertigungsaufwand erreicht.

Bei einer weiteren vorteilhaften Ausgestaltung verlaufen die schrägen Seitenflächen der ersten Profilierung im Wesentlichen parallel zu den schrägen Seitenflächen der zweiten Profilierung und die erste Kontaktfläche liegt im Bereich der schrägen Seitenflächen auf der zweiten Kontaktfläche flächig auf. Auf diese Weise wird die Auflagefläche zwischen der ersten Kontaktfläche und der zweiten Kontaktfläche maximiert.

Bei einer vorteilhaften Ausgestaltung sind zwischen der ersten Kontaktfläche und der zweiten Kontaktfläche stellenweise Hohlräume ausgebildet. Bei einem asynchronen Anlauf erhitzen sich insbesondere die Polschuhe und dehnen sich durch die Hitze aus. Dadurch kann sich das Material in den Hohlräumen ausdehnen und der Formschluss ist selbst bei hohen Temperaturen gewährleistet.

Vorzugsweise ist die jeweilige Profilierung zumindest in axiale Richtung im Wesentlich redundant ausgeführt. Die Erhöhungen und Vertiefungen einer redundant ausgeführten Profilierung weisen insbesondere die gleiche Form, die gleiche Größe und/oder den gleichen Abstand zueinander auf. Dies führt zu einer gleichmäßigen Querkraftübertragung auf der Oberfläche. Darüber hinaus kann eine redundant ausgeführte Profilierung kostengünstig und einfach hergestellt werden.

Zweckdienlicherweise weisen zumindest Teile der ersten Kontaktfläche und/oder der zweiten Kontaktfläche eine Oberflächenrauigkeit von mehr als 25 µm auf. Eine derartige Oberflächenrauigkeit kann beispielsweise durch Raustrahlen erreicht werden. Durch eine Erhöhung der Oberflächenrauigkeit wird der Haftreibungskoeffizient zwischen den Kontaktflächen erhöht, wodurch eine Relativverschiebung zusätzlich erschwert wird.

Bei einer bevorzugten Ausführungsform weist die jeweilige Profilierung Zahnstangen und/oder Zahnstangennuten auf. Eine Zahnstange ist insbesondere eine Erhöhung mit zwei schrägen Seitenflächen und einer zwischen den beiden schrägen Seitenflächen liegenden ebenen Zahnoberfläche. Eine Zahnstangennut ist das inverse Gegenstück zur Zahnstange. Eine Profilierung mit Zahnstangen und Zahnstangennuten hat sich als besonders robust bewährt.

Zweckdienlicherweise weisen die Zahnstangen im Querschnitt im Wesentlichen die Form eines, insbesondere gleichseitigen, Trapezes auf. Erfahrungsgemäß hat sich eine derartige Profilierung als besonders vorteilhaft erwiesen.

Bei einer weiteren vorteilhaften Ausgestaltung weist die jeweilige Profilierung Pyramidenstümpfe und/oder Pyramidenstumpfnuten auf. Ein Pyramidenstumpf ist insbesondere eine Erhöhung mit vier schrägen Seitenflächen und einer zwischen den vier schrägen Seitenflächen liegenden ebenen Pyramidenstumpfoberfläche. Eine Pyramidenstumpfnut ist das inverse Gegenstück zum Pyramidenstumpf. Durch eine derartige Profilierung erfolgt eine formschlüssige Querkraftübertragung in axiale Richtung und tangentiale Richtung.

Im Folgenden wird die Erfindung anhand der in den Figuren dargestellten Ausführungsbeispiele näher beschrieben und erläutert.

Es zeigen:
- FIG 1: einen Querschnitt einer elektrischen rotierenden Maschine.
- FIG 2: eine perspektivische Darstellung einer ersten Ausführungsform eines Rotors,
- FIG 3: eine vergrößerte Seitenansicht eines Rotors im Bereich eines Polschuhs mit einer ersten Ausführungsform einer Profilierung,
- FIG 4: einen vergrößerten Längsschnitt des Rotors im Bereich eines Polschuhs gemäß FIG 3,
- FIG 5: einen vergrößerten Längsschnitt eines Rotors im Bereich eines Polschuhs mit einer zweiten Ausführungsform einer Profilierung,
- FIG 6: einen vergrößerten Längsschnitt eines Rotors im Bereich eines Polschuhs mit einer dritten Ausführungsform einer Profilierung,
- FIG 7: einen vergrößerten Längsschnitt eines Rotors im Bereich eines Polschuhs mit einer vierten Ausführungsform einer Profilierung,
- FIG 8: einen vergrößerten Längsschnitt eines Rotors im Bereich eines Polschuhs mit einer fünften Ausführungsform einer Profilierung,
- FIG 9: einen vergrößerten Längsschnitt eines Rotors im Bereich eines Polschuhs mit einer sechsten Ausführungsform einer Profilierung,
- FIG 10: einen vergrößerte perspektivische Darstellung eines Rotors im Bereich eines Polschuhs mit einer siebten Ausführungsform einer Profilierung und
- FIG 11: einen Längsschnitt eines Rotors mit Verbindungselementen.

Gleiche Bezugszeichen haben in den verschiedenen Figuren die gleiche Bedeutung.

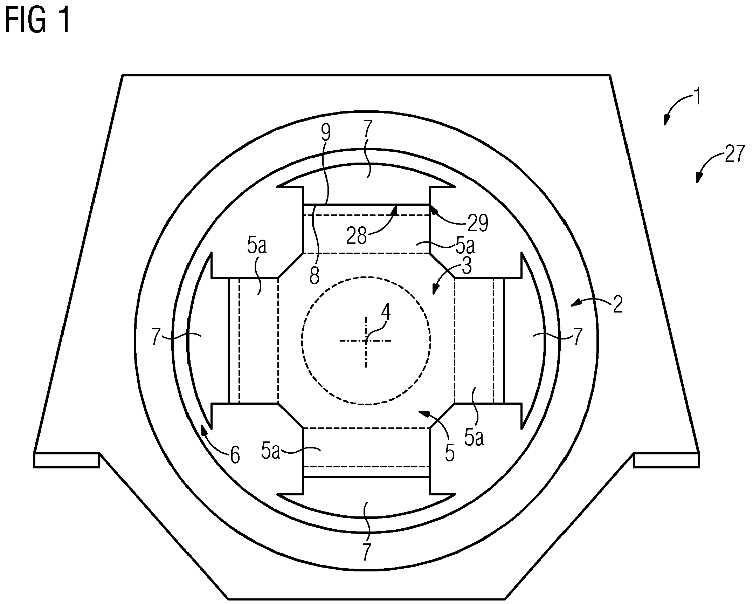

FIG 1 zeigt einen Querschnitt einer elektrischen rotierenden Maschine 1. Die elektrische rotierende Maschine 1 ist als direktanlaufende Synchronmaschine 27 ausgeführt und weist einen um eine Rotationsachse 4 rotierbaren Rotor 3 und einen den Rotor 3 umgebenden Stator 2 auf, wobei sich zwischen dem Rotor 3 und dem Stator 2 ein Luftspalt 6 befindet. Die Synchronmaschine 27 ist mit einer Leistung von mindestens 1 Megawatt betreibbar. Die Spulen des Stators 2 und des Rotors 3 sind aus Gründen der Übersichtlichkeit nicht dargestellt.

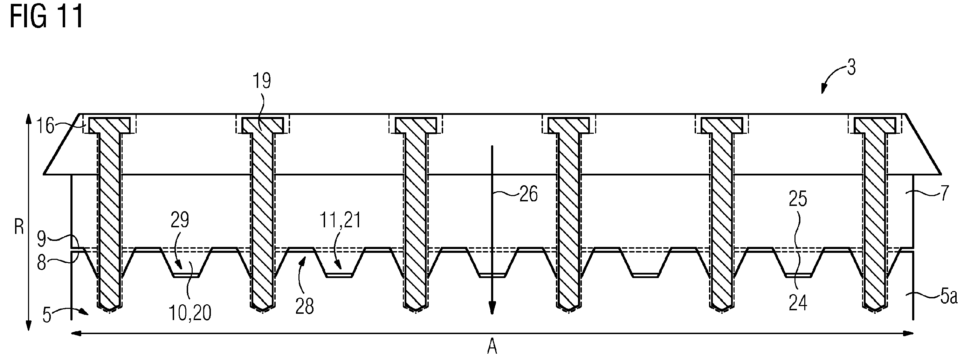

Der Rotor 3 der direktanlaufenden Synchronmaschine 27 weist eine Welle 5 mit exemplarisch vier orthogonal angeordneten Schenkelpolen 5a auf, wobei die Schenkelpole 5 mit Polschuhen 7 versehen sind. Die Welle 5 und die Polschuhe 7 bestehen aus einem als Vollmaterial ausgeführten weichmagnetischen Stahl, insbesondere aus einem Vergütungsstahl. Die Polschuhe 7 werden mit Hilfe von als Schrauben ausgeführten Verbindungselementen 19 (siehe FIG 11) auf die Welle 5 geschraubt. Die Schrauben 16 sind aus Gründen der Übersichtlichkeit in FIG 1 nicht dargestellt.

Jeder Schenkelpol 5a der Welle 5 weist eine erste Kontaktfläche 8 auf und jeder Polschuh 7 weist eine zweite Kontaktfläche 9 auf. Die Welle 5 ist über eine erste Kontaktfläche 8 mit der zweiten Kontaktfläche 9 der Polschuhe 7 kontaktiert. Die erste Kontaktfläche 8 weist eine erste Profilierung 28 auf und die zweite Kontaktfläche 9 weist eine zur ersten Profilierung 28 korrespondierende zweite Profilierung 29 auf (die Profilierung wird weiterhin auch Freiformprofilierung genannt). Die erste Kontaktfläche 8 ist mit der zweiten Kontaktfläche 9 durch die erste Profilierung 28 und die korrespondierende zweite Profilierung 29 derartig kontaktiert, dass eine formschlüssige Verbindung zwischen der ersten Kontaktfläche 8 und der zweiten Kontaktfläche 9 besteht. Hierbei liegt die Höhenvariation der Profilierungen 28, 29 jeweils im Millimeterbereich bis Zentimeterbereich.

Durch die beiden zueinander passenden Freiformprofilierungen 28, 29 wird eine formschlüssige Kraftübertragung in Querkraftrichtung erreicht. Durch eine derartige formschlüssige Verbindung wird eine wärmeinduzierte Relativverschiebung zwischen dem Polschuh 7 und der Welle 5, welche insbesondere bei einem asynchronen Anlauf durch im Polschuh 7 induzierte Wirbelströme verursacht wird, vermieden. Die Freiformprofilierungen 28, 29 können als Ersatz oder Ergänzung zu einer reibschlüssigen Kraftübertragung genutzt werden. Für eine derartige reibschlüssige Kraftübertragung weisen zumindest Teile der ersten Kontaktfläche 8 und/oder der zweiten Kontaktfläche 9 eine Oberflächenrauigkeit von mehr als 25 µm auf. Eine derartige Oberflächenrauigkeit kann beispielsweise durch Raustrahlen erreicht werden.

Verschiedene Ausführungsformen der Profilierungen 28, 29 der Kontaktflächen 8, 9 der Welle und des Polschuhs 7 eines derartigen Rotors 3 sind in den folgenden Figuren dargestellt und werden im Folgenden näher beschrieben und erläutert.

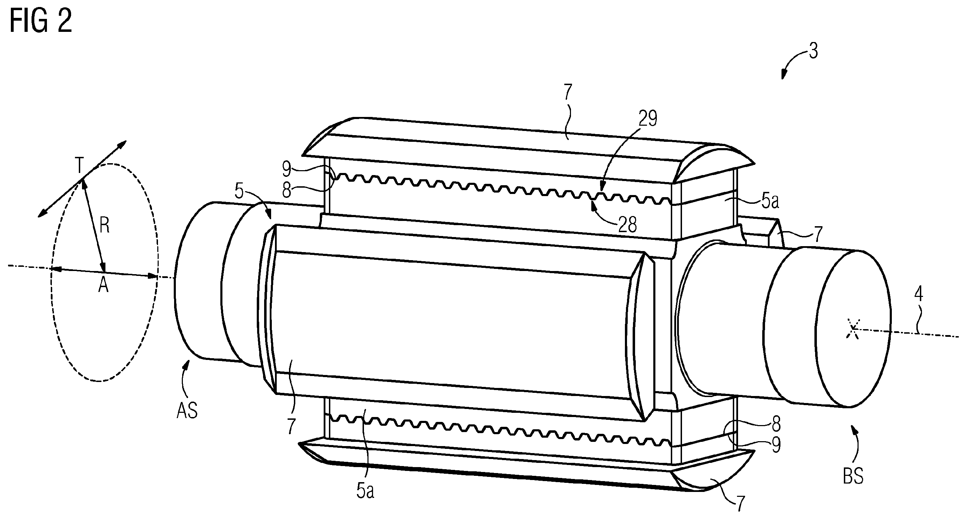

FIG 2 zeigt eine perspektivische Darstellung einer ersten Ausführungsform eines Rotors 3. Der Rotor 3 ist um eine Rotationsachse 4 rotierbar, wobei die Rotationsachse 4 eine axiale Richtung A, eine radiale Richtung R und eine tangentiale Richtung T definiert. Der Rotor 3 weist eine Antriebsseite AS und eine Nicht-Antriebsseite BS auf. Wie in FIG 1 gezeigt, steht die ersten Kontaktflächen 8 der Welle 5 mit der zweiten Kontaktfläche 9 der Polschuhe 7 durch eine erste Profilierung 28 und eine korrespondierende zweite Profilierung 29 in einer formschlüssigen Verbindung.

Die Profilierungen 28, 29, welche durch eine Höhenvariation der jeweiligen Kontaktflächen 8, 9 ausgeführt sind, erstrecken sich über die gesamte axiale Länge der Kontaktflächen 8, 9 und sind redundant ausgeführt. Unter einer redundanten Ausführung ist hier zu verstehen, dass die Erhöhungen und Vertiefungen der Profilierungen 28, 29 die gleiche Form, die gleiche Höhe, Breite und den gleichen Abstand zueinander aufweisen. Die weitere Ausführung des Rotors 3 entspricht der aus FIG 1.

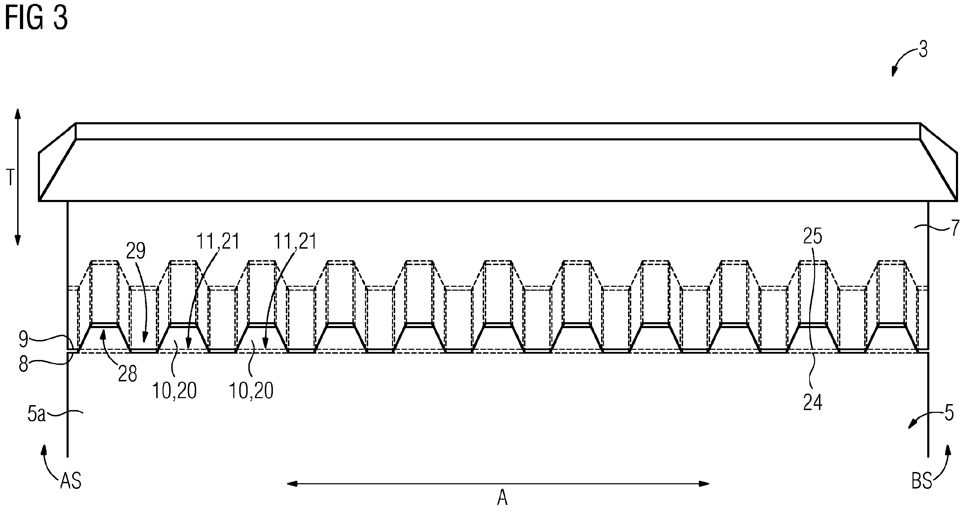

FIG 3 zeigt eine vergrößerte Seitenansicht eines Rotors 3 im Bereich eines Polschuhs 7 mit einer ersten Ausführungsform einer Profilierung 28, 29. Die Profilierungen 28, 29 erstrecken sich über die gesamte axiale Länge der Kontaktflächen 8, 9 und sind durch Zahnstangen 20 und zu den Zahnstangen 20 korrespondierende Zahnstangennuten 21 ausgeführt, wobei die Zahnstangen 20 und Zahnstangennuten 21 in tangentiale Richtung T verlaufen. Die Zahnstangen 20 befinden sich exemplarisch auf der ersten Kontaktfläche 8 der Welle 5 und die korrespondierenden Zahnstangennuten 21 befinden sich auf der zweiten Kontaktfläche 9 des Polschuhs 7.

Bei den Zahnstangen 20 handelt es sich um Erhöhungen 10 bezüglich einer ersten Bezugsebene 24 der zweiten Kontaktfläche 9 mit trapezförmigem Querschnitt, welche insbesondere gleichartig ausgeführt und bevorzugt mit gleichen Abständen in axiale Richtung A auf der ersten Kontaktfläche 8 angeordnet sind. Bei den Zahnstangennuten 21 handelt es sich um Vertiefungen 11 bezüglich einer zweiten Bezugsebene 25 der ersten Kontaktfläche 8, welche passend zu den Zahnstangennuten 20 auf der zweiten Kontaktfläche 9 angeordnet sind. Die Zahnstangen 20 weisen, bezogen auf die jeweilige Bezugsebene 24, 25, eine konstante Höhe und die Zahnstangennuten 21 eine konstante Tiefe in tangentiale Richtung T auf. Die Dimensionierung der Zahnstangen 20 und der dazu korrespondierenden Zahnstangennuten 21 sowie deren axiale Abstände richten sich nach der Querkraftbelastung und der daraus resultierenden Flächenpressung. Die Höhe der Zahnstangen 20 und die Tiefe der Zahnstangennuten 21 liegen jeweils, bezogen auf ihre Bezugsebene 24, 25, im Millimeterbereich bis Zentimeterbereich. Die übrige Ausführung des Rotors 3 entspricht der aus FIG 2.

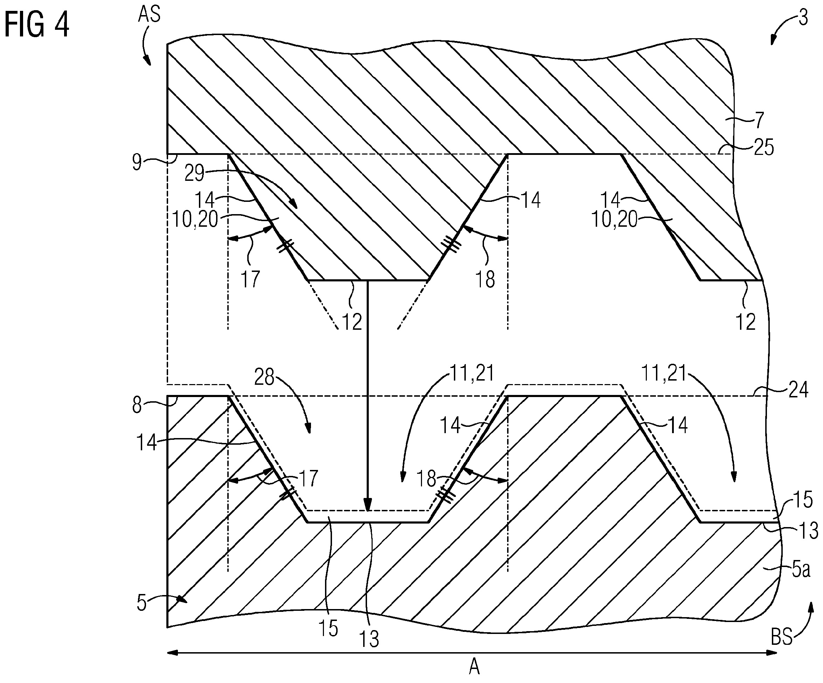

FIG 4 zeigt einen vergrößerten Längsschnitt des Rotors 3 im Bereich eines Polschuhs 7 gemäß FIG 3. Die in FIG 3 beschriebenen Zahnstangen 20 und Zahnstangennuten 21 sind in FIG 4 detaillierter dargestellt, wobei sich die Zahnstangen 20 exemplarisch auf der zweiten Kontaktfläche 9 des Polschuhs 7 und die korrespondierenden Zahnstangennuten 21 auf der ersten Kontaktfläche 8 der Welle 5 befinden. Die Zahnstangen 20 weisen einen Querschnitt auf, welcher einem gleichseitigen Trapez entspricht, wobei jede Zahnstange 20 zwei Seitenflächen 14 und eine zwischen den beiden Seitenflächen 14 liegende Zahnoberfläche 12 aufweist. Die korrespondierenden Zahnstangennuten 21 bilden, bezogen auf die erste Bezugsebene 24 Vertiefungen 11, deren Querschnitt ebenfalls einem gleichseitigen Trapez entspricht. Jede Zahnstangennut 21 weist zwei Seitenflächen 14 und eine zwischen den beiden Seitenflächen 14 liegende Nutoberfläche 13 auf.

Die schrägen Seitenflächen 14 der Zahnstangen 20 verlaufen parallel zu den schrägen Seitenflächen 14 der zugehörigen Zahnstangennuten 21, wobei die erste Kontaktfläche 8 im Bereich der schrägen Seitenflächen 14 auf der zweiten Kontaktfläche 9 im Wesentlichen flächig aufliegt.

Die Seitenflächen 14 der Zahnstangen 20 und Zahnstangennuten 21 schließen jeweils einen ersten Winkel 17 und einen zweiten Winkel 18 ein. Um Relativverschiebungen zwischen Polschuh 7 und Welle 5 zu vermeiden, wird die Kontaktierung zwischen den Profilierungen 28, 29 spielfrei gestaltet. Daher ist es vorteilhaft, wenn die Winkel 17, 18 im Bereich von 10° bis 50° liegen. Bei senkrecht zur Querkraftrichtung stehenden Seitenflächen 14 ist ein komplexerer Fügeprozess erforderlich, um die Spielfreiheit zu gewährleisten. Entspricht die Querschnittsfläche der Zahnstangen 20 und Zahnstangennuten 21 einem gleichseitigen Trapez, so sind der erste Winkel 17 und der zweite Winkel 18 gleich groß. Bei gleich großen Winkeln erfolgt die formschlüssige Querkraftübertragung in Richtung der Antriebsseite AS und in Richtung der Nicht-Antriebsseite BS identisch.

Zwischen der ersten Kontaktfläche 8 und der zweiten Kontaktfläche 9 befinden sich im Bereich der Zahnoberflächen 12 und Nutoberflächen 13 Hohlräume 15. Der verwendete weichmagnetische Stahl kann sich in den Hohlräumen 15 ausdehnen, falls sich bei einem asynchronen Anlauf insbesondere die Polschuhe 7 erhitzen und dadurch ausdehnen. Die übrige Ausführung des Rotors 3 entspricht der aus FIG 2 und FIG 3.

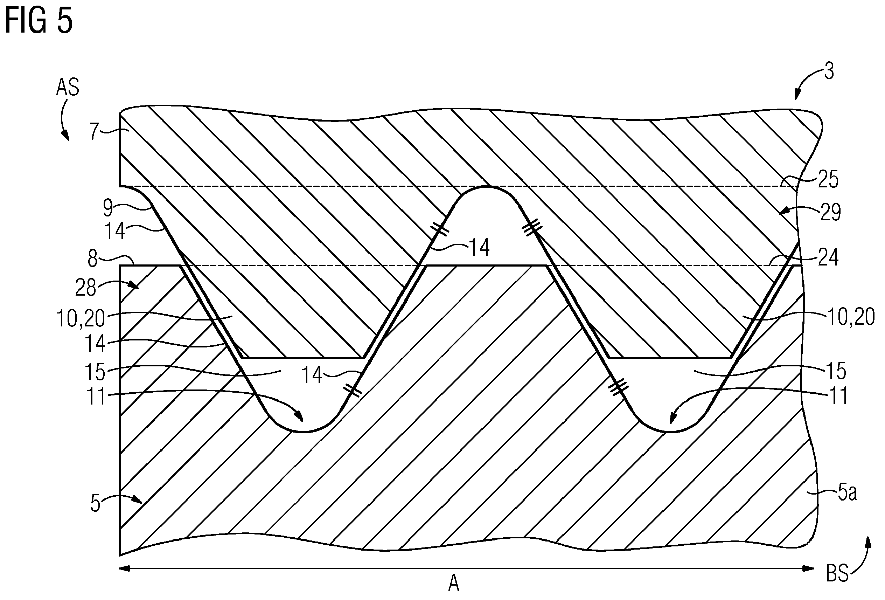

FIG 5 zeigt einen vergrößerten Längsschnitt eines Rotors 3 im Bereich eines Polschuhs 7 mit einer zweiten Ausführungsform einer Profilierung 28, 29. Im Vergleich zu FIG 4 sind die Vertiefungen 11 abgerundet ausgeführt, wodurch ein, im Vergleich zu FIG 4, größerer Hohlraum 15 zwischen den Kontaktflächen 8, 9 ausgebildet ist. Weitere Ausgestaltungen der Erhöhungen 10 und Vertiefungen 11 der Freiformprofilierung 28, 29, bei denen die erste Kontaktfläche 8 im Bereich der schrägen Seitenflächen 14 auf der zweiten Kontaktfläche 9 im Wesentlichen flächig aufliegt, sind denkbar und gehören zum Gegenstand der Erfindung. Die übrige Ausführung des Rotors 3 entspricht der aus FIG 4.

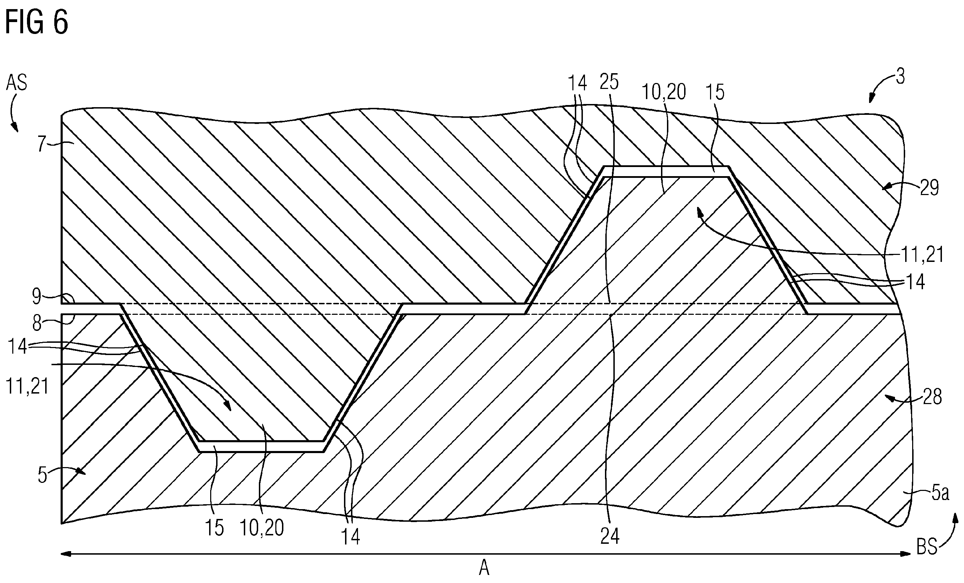

FIG 6 zeigt einen vergrößerten Längsschnitt eines Rotors 3 im Bereich eines Polschuhs 7 mit einer dritten Ausführungsform einer Profilierung 28, 29. Im Vergleich zu FIG 4 befinden sich als Zahnstangen 20 ausgeführten Erhöhungen 10 und zu den Erhöhungen 10 korrespondierende als Zahnstangennuten 21 ausgeführte Vertiefungen 11 sowohl auf der ersten Kontaktfläche 8 der Welle 5 als auch auf der zweiten Kontaktfläche 9 des Polschuhs 7. Beispielsweise sind die Erhöhungen 10 und Vertiefungen 11 auf der ersten Kontaktfläche 8 und auf der zweiten Kontaktfläche 9 alternierend angeordnet. Weitere Ausgestaltungen der Erhöhungen 10 und Vertiefungen 11 der Freiformprofilierung 28, 29, bei denen die erste Kontaktfläche 8 im Bereich der schrägen Seitenflächen 14 auf der zweiten Kontaktfläche 9 im Wesentlichen flächig aufliegt, sowie verschiedene Varianten von deren Anordnung sind denkbar und gehören zum Gegenstand der Erfindung. Die übrige Ausführung des Rotors 3 entspricht der aus FIG 4.

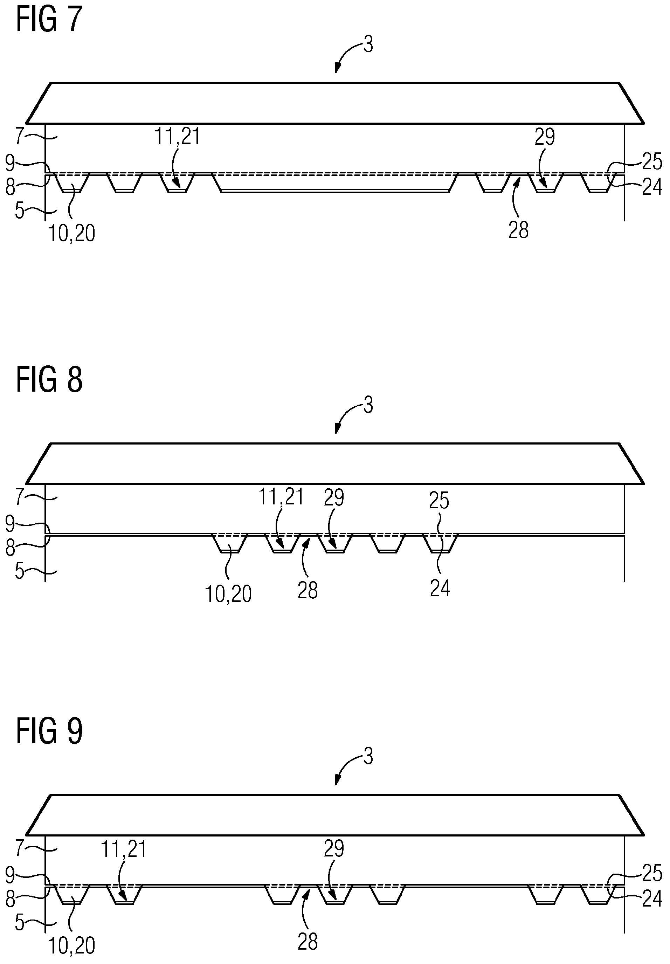

FIG 7 zeigt einen vergrößerten Längsschnitt eines Rotors 3 im Bereich eines Polschuhs 7 mit einer vierten Ausführungsform einer Profilierung 28, 29, wobei sich die Profilierungen 28, 29 lediglich über einen Teil der axialen Länge der jeweiligen Kontaktfläche 8, 9 erstrecken. Die als Zahnstangen 20 ausgeführten Erhöhungen 10 und die zu den Erhöhungen 10 korrespondierenden als Zahnstangennuten 21 ausgeführten Vertiefungen 11 sind im Wesentlichen an den axialen Enden der jeweiligen Kontaktflächen 8, 9 angeordnet. Die übrige Ausführung des Rotors 3 entspricht der aus FIG 4.

FIG 8 zeigt einen vergrößerten Längsschnitt eines Rotors 3 im Bereich eines Polschuhs 7 mit einer fünften Ausführungsform einer Profilierung 28, 29, wobei sich die Profilierungen 28, 29, ähnlich wie in FIG 7, lediglich über einen Teil der axialen Länge der jeweiligen Kontaktfläche 8, 9 erstrecken. Die als Zahnstangen 20 ausgeführten Erhöhungen 10 und die zu den Erhöhungen 10 korrespondierenden als Zahnstangennuten 21 ausgeführten Vertiefungen 11 sind im Wesentlichen axial mittig angeordnet. Die übrige Ausführung des Rotors 3 entspricht der aus FIG 4.

FIG 9 zeigt einen vergrößerten Längsschnitt eines Rotors 3 im Bereich eines Polschuhs 7 mit einer sechsten Ausführungsform einer Profilierung 28, 29, wobei sich die Profilierungen 28, 29, ähnlich wie in FIG 7 und FIG 8, lediglich über einen Teil der axialen Länge der jeweiligen Kontaktfläche 8, 9 erstrecken. Die als Zahnstangen 20 ausgeführten Erhöhungen 10 und die zu den Erhöhungen 10 korrespondierenden als Zahnstangennuten 21 ausgeführten Vertiefungen 11 sind im Wesentlichen an den axialen Enden der jeweiligen Kontaktflächen 8, 9 sowie axial mittig angeordnet. Die übrige Ausführung des Rotors 3 entspricht der aus FIG 4.

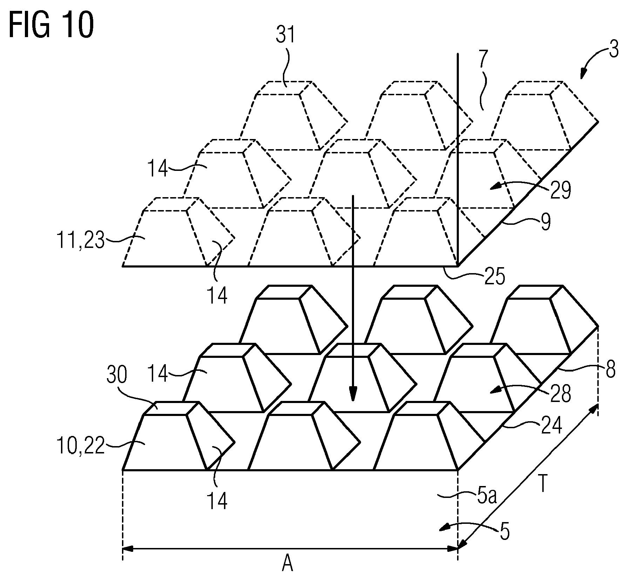

FIG 10 zeigt eine vergrößerte perspektivische Darstellung eines Rotors 3 im Bereich eines Polschuhs 7 mit einer siebten Ausführungsform einer Profilierung 28, 29. Die Profilierungen 28, 29 erstrecken sich über die gesamte axiale und tangentiale Länge der Kontaktflächen 8, 9. Die erste Profilierung 28 auf der ersten Kontaktfläche der Welle 5 weist exemplarisch Erhöhungen 10, bezogen auf eine erste Bezugsebene 24, auf. Die zweite Profilierung 29 auf der zweiten Kontaktfläche 9 des Polschuhs 7 weist dazu passende Vertiefungen 11, bezogen auf eine zweite Bezugsebene 25, auf. Die Erhöhungen 10 sind als Pyramidenstümpfe 22 und die Vertiefungen 11 als zu den Pyramidenstümpfen 22 korrespondierenden Pyramidenstumpfnuten 23 ausgeführt. Durch derartige Profilierungen 28, 29 kann eine formschlüssige Querkraftübertragung in axiale Richtung A und tangentiale Richtung T erfolgen. Die Höhe der Pyramidenstümpfe 22 und die Tiefe der Pyramidenstumpfnuten 23 liegen jeweils, bezogen auf ihre Bezugsebene 24, 25, im Millimeterbereich bis Zentimeterbereich.

Die Pyramidenstümpfe 22 und korrespondierenden Pyramidenstumpfnuten 23 weisen jeweils vier schräge Seitenflächen 14 auf. Weitere Ausgestaltungen der Erhöhungen 10 und Vertiefungen 11, bei denen die erste Kontaktfläche 8 im Bereich der schrägen Seitenflächen 14 auf der zweiten Kontaktfläche 9 im Wesentlichen flächig aufliegt, sind denkbar und gehören zum Gegenstand der Erfindung.

FIG 11 zeigt einen Längsschnitt eines Rotors 3 im Bereich eines Polschuhs 7 mit Verbindungselementen 19. Der Polschuh 7 und die Welle 5 weisen Bohrungen 16 auf in denen als Schrauben ausgeführte Verbindungselemente 19 durch den Polschuh 7 und die Welle 5 in radiale Richtung R verlaufen. Durch die Schrauben 19 wird der Polschuh 7 mit einem Anpressdruck 26 auf der Welle 5 befestigt. Die Schrauben 19 oder andere Verbindungselemente 19 wie Zylinderstifte ermöglichen lediglich einen punktuellen Formschluss. Da die in Verbindung mit einer Wärmeausdehnung auftretenden Querkräfte zumeist sehr hoch sind, bedarf es einer großen Anzahl derartiger Verbindungselemente 19 und/oder entsprechend große Querschnitte. Der Raum für zusätzliche Verbindungselemente 19 ist jedoch begrenzt, da insbesondere für das Halten der im Betrieb wirkenden Fliehkräfte weitere Verbindungselemente erforderlich sind. Eine Freiformprofilierung 18, 19 bedarf keiner zusätzlichen Verbindungselemente. Durch die flächige formschlüssige Verbindung der ersten Kontaktfläche 8 mit der zweiten Kontaktfläche 9 wird eine Verschiebung der Kontaktflächen 8, 9 gegeneinander vermieden und damit ein stabileres Schwingungsverhalten erreicht.

## Patentansprüche

1. Rotor (3) für eine elektrische rotierende Maschine (1), insbesondere eine Synchronmaschine (27), mit einer Welle (5) und mindestens einem Polschuh (7),
wobei die Welle (5) eine erste Kontaktfläche (8) aufweist, wobei der mindestens eine Polschuh (7) eine zweite Kontaktfläche (9) aufweist,
**dadurch gekennzeichnet, dass**
die erste Kontaktfläche (8) eine erste Profilierung (28) aufweist und die zweite Kontaktfläche (9) eine zur ersten Profilierung (28) korrespondierende zweite Profilierung (29) aufweist,
wobei die erste Profilierung (28) der ersten Kontaktfläche (8) formschlüssigen auf der korrespondierenden zweiten Profilierung (29) der zweiten Kontaktfläche (9) aufliegt.

2. Rotor (3) nach Anspruch 1,
wobei durch die Profilierungen (28, 29) zumindest in einer axialen Richtung (A) eine Höhenvariation der jeweiligen Kontaktflächen (8, 9) vorliegt.

3. Rotor (3) nach einem der Ansprüche 1 oder 2,
wobei sich die Profilierungen (28, 29) im Wesentlichen über die gesamte axiale Länge der jeweiligen Kontaktfläche (8, 9) erstrecken.

4. Rotor (3) nach einem der vorhergehenden Ansprüche,
wobei die Profilierungen (28, 29) schräge Seitenflächen (14) aufweisen,
wobei die erste Kontaktfläche (8) mit der zweiten Kontaktfläche (9) im Bereich der schrägen Seitenflächen (14) kontaktiert ist.

5. Rotor (3) nach Anspruch 4,
wobei die schrägen Seitenflächen (14) der ersten Profilierung (28) im Wesentlichen parallel zu den schrägen Seitenflächen (14) der zweiten Profilierung (29) verlaufen und wobei die erste Kontaktfläche (8) im Bereich der schrägen Seitenflächen (14) auf der zweiten Kontaktfläche (9) flächig aufliegt.

6. Rotor nach einem der vorhergehenden Ansprüche,
wobei zwischen der ersten Kontaktfläche (8) und der zweiten Kontaktfläche (9) stellenweise Hohlräume (15) ausgebildet sind.

7. Rotor (3) nach einem der vorhergehenden Ansprüche,
wobei die jeweilige Profilierung (28, 29) zumindest in axiale Richtung (A) im Wesentlich redundant ausgeführt ist.

8. Rotor (3) nach einem der vorhergehenden Ansprüche,
wobei zumindest Teile der ersten Kontaktfläche (8) und/oder der zweiten Kontaktfläche (9) eine Oberflächenrauigkeit von mehr als 25 µm aufweisen.

9. Rotor (3) nach einem der vorhergehenden Ansprüche,
wobei die jeweilige Profilierung (28, 29) Zahnstangen (20) und/oder Zahnstangennuten (21) aufweist.

10. Rotor (3) nach Anspruch 9,
wobei die Zahnstangen (20) im Querschnitt im Wesentlichen die Form eines, insbesondere gleichseitigen, Trapezes aufweisen.

11. Rotor (3) nach einem der Ansprüche 1 bis 8,
wobei die jeweilige Profilierung (28, 29) Pyramidenstümpfe (22) und/oder Pyramidenstumpfnuten (23) aufweist.

12. Elektrische rotierende Maschine (1), insbesondere eine Synchronmaschine (27), mit einem Rotor (3) nach einem der Ansprüche 1 bis 11.

13. Verfahren zur Herstellung eines Rotors (3) für eine elektrische rotierende Maschine (1), insbesondere eine Synchronmaschine (27), nach einem der Ansprüche 1 bis 11.
